# EUROPÄISCHE PATENTSCHRIFT

(11) **EP 3 454 018 B1**
(45) Veröffentlichungstag und Bekanntmachung des Hinweises auf die Patenterteilung: **08.06.2022**
(21) Anmeldenummer: 18000652.0
(22) Anmeldetag: 06.08.2018
(51) Int. Cl.: G01F 1/66

(54) **DURCHFLUSSZÄHLER UND VERFAHREN ZUR HERSTELLUNG EINES DURCHFLUSSZÄHLERS**
FLOW METER AND METHOD FOR PRODUCING A FLOW METER
DÉBITMÈTRE ET PROCÉDÉ DE FABRICATION D'UN DÉBITMÈTRE

(30) Priorität: 09.09.2017 DE 102017008515; 07.11.2017 DE 102017010282
(43) Veröffentlichungstag der Anmeldung: 13.03.2019
(73) Patentinhaber: Diehl Metering GmbH, 91522 Ansbach (DE)
(72) Erfinder: Meßthaler, Roland, 91575 Windsbach (DE); Eff, Markus, 91567 Herrieden (DE); Sonnenberg, Hans-Michael, 91522 Ansbach (DE)
(74) Vertreter: Diehl Patentabteilung

(56) Entgegenhaltungen:
- EP-A1- 0 890 826
- EP-A1- 2 565 593
- EP-A2- 1 775 560
- EP-A2- 2 172 657
- EP-B1- 1 775 560
- WO-A1-2017/215716

## Beschreibung

Die Erfindung betrifft einen Durchflusszähler zur Erfassung zur Erfassung einer Durchflussmenge eines Fluids, umfassend ein Gehäuse mit einem Strömungskanal, durch den das Fluid von einer Einlassöffnung des Gehäuses zu einer Auslassöffnung des Gehäuses führbar ist, ein Messrohr, das in den Strömungskanal eingesetzt ist und den Strömungsquerschnitt in einem Abschnitt des Strömungskanals verengt, und eine Halteeinrichtung, durch die das Messrohr an dem Gehäuse gehaltert ist. Daneben betrifft die Erfindung ein Verfahren zur Herstellung eines Durchflusszählers.

Ein Durchfluss durch einen Strömungskanal kann durch einen Ultraschallzähler gemessen werden. Hierbei werden zwei Ultraschallwandler genutzt, von denen jeweils einer Ultraschallwellen aussendet, die der andere empfängt. Durch eine Messung der Laufzeit des Ultraschalls zwischen diesen Ultraschallwandlern bzw. einer Laufzeitdifferenz zwischen den Übertragungsrichtungen kann eine Strömungsgeschwindigkeit und somit bei bekanntem Rohrdurchmesser auch einen Durchfluss erfasst werden. Um innerhalb der Messstrecke einerseits ein definiertes Strömungsprofil zu realisieren und andererseits den Strömungsquerschnitt zu verengen und somit die Strömungsgeschwindigkeit zu erhöhen, werden häufige Messrohre genutzt, die in den Strömungskanal eingesetzt werden. Diese sind als separate Komponenten ausgebildet, die in das Gehäuse, das den Strömungskanal bildet, eingesetzt werden können. Es ist hierbei bekannt, das Messrohr gemeinsam mit weiteren Komponenten an dem Gehäuse zu befestigen. Beispielsweise ist es aus den Druckschriften EP 2 278 281 A1 und EP 2 423 648 A1 bekannt, das Messrohr zunächst an einem Träger anzuordnen, der neben dem Messrohr Reflektoren für eingestrahlte Ultraschallwellen trägt, und den so gebildeten Messeinsatz anschließend in das Gehäuse einzubringen. EP 2 172 657 A2 und EP 1 775 560 A2 offenbaren jeweils ein Ultraschallmessgerät mit einem Strömungsrichter.

Durchflusszähler, insbesondere Ultraschallzähler, weisen typischerweise eine Abhängigkeit der Messgrößen von einem Strömungsprofil im Messbereich auf. Es ist daher bekannt, in dem Gehäuse stromaufwärts und/oder stromabwärts der Messstrecke Strömungsrichter vorzusehen, um das Strömungsprofil im Messbereich zu beeinflussen. Entsprechende Strömungsrichter, die beispielsweise siebartig ausgebildet sein können, können unabhängig vom Messeinsatz im Bereich einer Einlassöffnung bzw. einer Auslassöffnung des Gehäuses montiert werden. Dies ist jedoch problematisch, wenn Durchflusszähler mit unterschiedlichen Gehäusegrößen bzw. unterschiedlichen Längen von Strömungskanälen bereitgestellt werden sollen, da in diesem Fall die Strömungsrichter unterschiedliche Abstände zu dem Messbereich aufweisen, was wiederum zu unterschiedlichen Strömungsprofilen im Messbereich führen kann.

Der Erfindung liegt somit die Aufgabe zugrunde, eine verbesserte Strömungsrichtung in einem Durchflusszähler bei gleichzeitigem möglichst einfachem Aufbau und insbesondere einer einfachen Anpassbarkeit der Gehäusekonfiguration zu ermöglichen.

Die Aufgabe wird erfindungsgemäß durch einen Durchflusszähler nach dem beigefügten Anspruch 1 und durch das Verfahren nach dem beigefügten Anspruch 14 gelöst. Vorteilhafte Ausführungsbeispiele wurden in den abhängigen Ansprüchen 2-13 angegeben.

Erfindungsgemäß wird es vorgeschlagen, einen Strömungsrichter formschlüssig an einer Halteeinrichtung zu befestigen, die das Messrohr an dem Gehäuse haltert. Hierdurch wird einerseits erreicht, dass der Strömungsrichter unabhängig von einer Länge des Strömungskanals stets im gleichen Abstand zu dem Messrohr bzw. Messbereich angeordnet werden kann, ohne weitere Komponenten zu modifizieren bzw. eine aufwändige Ausgestaltung des Gehäuses zur Halterung des Strömungsrichters zu erfordern. Insbesondere können die Halteeinrichtung, das Messrohr und der Strömungsrichter sowie optional weitere Komponenten, beispielsweise Reflexionselemente für Ultraschallwellen, gemeinsam einen Messeinsatz ausbilden, der nach dem Zusammenfügen am Stück in den Strömungskanal eingeschoben werden kann. Der Aufbau des Durchflusszählers kann somit in wenigen einfachen Schritten durchgeführt werden.

Durch die separate Ausbildung des Strömungsrichters wird zudem die Flexibilität beim Aufbau des Durchflusszählers erhöht. Beispielsweise kann es vorteilhaft sein, für verschiedene Geometrien des Strömungskanals, verschiedene Durchflussmengen oder Ähnliches unterschiedliche Strömungsrichter zu nutzen. Beim erfindungsgemäßen Durchflusszähler ist es in diesem Fall ausreichend, einen entsprechend angepassten Strömungsrichter zu nutzen. Die anderen Komponenten müssen nicht verändert werden. Andererseits kann es in einigen Fällen beispielsweise vorteilhaft auch sein, ein anderes Messrohr zu nutzen. Auch dies ist beim erfindungsgemäßen Durchflusszähler problemlos möglich, ohne dass die anderen Komponenten modifiziert werden müssen. Der erfindungsgemäße Durchflusszähler ist somit hochmodular aufgebaut, was beispielsweise vorteilhaft ist, wenn Durchflusszähler für eine Vielzahl von Anwendungsfällen hergestellt werden sollen.

Beim dem Strömungsrichter kann es sich insbesondere um eine Art Sieb handeln, das sich im Wesentlichen über dem gesamten Strömungsquerschnitt des Strömungskanals erstreckt und diesen in durch das Vorsehen mehrerer Durchbrechungen in mehrere Strömungsbereiche aufteilt. Beispielsweise kann der Strömungsrichter durch einen Rand gebildet werden, der sich in Umfangsrichtung des Strömungskanals erstreckt, und der Bereich innerhalb dieses Randes kann durch mehrere Wände unterteilt sein. Die Durchbrüche können hierbei insbesondere näherungsweise die Form von Kreissegmenten aufweisen, wobei diese Kreissegmente durch eine oder mehrere konzentrische Ringwände weiter unterteilt sein können. Die verschiedenen Durchbrechungen können näherungsweise den gleichen Strömungsquerschnitt aufweisen, es ist jedoch auch möglich, deutlich unterschiedlich große Strömungsquerschnitte vorzusehen.

Ein solcher Strömungsrichter bzw. ein solches Sieb kann insbesondere dazu eingesetzt werden, Einlaufstörungen zu vermeiden. Es kann jedoch auch vorteilhaft sein, die Strömung im Ausflussbereich zu richten.

Der Durchflusszähler weist vorzugsweise Messmittel zur Erfassung einer Strömungsgeschwindigkeit in einem Messbereich auf. Beispielsweise können stromaufwärts und stromabwärts von dem Messrohr Ultraschallwandler vorgesehen sein, von denen Ultraschallwellen in das Fluid eingestrahlt werden bzw. aus dem Fluid erfasst werden. Durch eine Messung von Laufzeiten zwischen den Ultraschallwandlern bzw. Laufzeitunterschieden zwischen den beiden Durchstrahlungsrichtungen kann eine Durchflussgeschwindigkeit und somit bei bekanntem Strömungsquerschnitt ein Durchflussvolumen bestimmt werden. Die Ultraschallwandler können in oder an dem Gehäuse befestigt sein und Ultraschallwellen im Wesentlichen senkrecht zur Strömungsrichtung einstrahlen bzw. empfangen. Die Umlenkung der Ultraschallwellen zur Führung durch das Messrohr kann durch Reflexionselemente erfolgen, die im Strömungspfad angeordnet sind. Die Erfassung von Laufzeiten und die Berechnung von Durchflussmengen kann durch eine entsprechende Steuereinrichtung erfolgen. Entsprechende Einrichtungen sind im Stand der Technik bekannt und sollen daher nicht detailliert erläutert werden.

Das Messrohr begrenzt den Strömungsquerschnitt im Messbereich vorzugsweise allseitig. Es kann innen- und/oder außenseitig rund sein, jedoch auch eckig sein oder andere Strukturen der Innen-/oder Außenwand aufweisen.

Das Messrohr, das Gehäuse, die Halteeinrichtung und der Strömungsrichter sind vorzugsweise jeweils separate Bauteile bzw. Gruppen von Bauteilen, die beim Aufbau des Durchflusszählers durch Kraft- oder Formschluss, beispielsweise durch Verrasten zusammengesetzt werden.

Der Strömungsrichter kann von dem Messrohr beabstandet angeordnet sein. Der Strömungsrichter kann randseitig an den Wänden des Strömungskanals anliegen bzw. zumindest näherungsweise den gesamten Querschnitt des Strömungskanals überspannen. Die Verbindung zwischen dem Strömungsrichter und der Halteeinrichtung kann vorzugsweise im Bereich der Mitte des Strömungsquerschnitts des Strömungskanals erfolgen. Ergänzend oder alternativ können weitere Verbindungen vorgesehen werden, die von der Mitte des Strömungsquerschnitts beabstandet sind.

Der Durchflusszähler kann insbesondere zur Messung eines Durchflusses einer Flüssigkeit, insbesondere von Wasser, dienen. Bei Wasserzählern ist es notwendig mit hoher Präzision und hoher Dynamik messen zu können. Zudem sollen diese Geräte eine hohe Robustheit gegenüber inneren und äußeren Störeinflüssen besitzen. Hieraus resultieren hohe Ansprüche an die Strömungsführung, die durch den erfindungsgemäßen Aufbau des Durchflusszählers erfüllt werden können. Der in das Gehäuse einzuführende Messeinsatz, der aus der Halteeinrichtung, dem Messrohr und dem Strömungsrichter besteht und der optional zusätzlich Reflexionselemente aufweisen kann, ist aufgrund des erfindungsgemäßen Aufbaus sowohl einfach handmontierbar als auch vollautomatisch montierbar.

Die Halteeinrichtung kann in Richtung der Einlassöffnung und/oder der Auslassöffnung über das Messrohr hinausragen und/oder das Messrohr in Umfangsrichtung des Messrohrs umgreifen. Vorzugsweise ist der Verbindungsabschnitt, an dem der Strömungsrichter angreift, an einem Abschnitt der Halteeinrichtung angeordnet, der in Richtung der Einlassöffnung bzw. der Auslassöffnung über das Messrohr hinausragt. Somit kann der Strömungsrichter in einem definierten Abstand von dem Messrohr angeordnet werden.

Die Halteeinrichtung kann das Messrohr insbesondere vollständig umgreifen. In zumindest einem Abschnitt des Messrohrs kann das Messrohr umfangsseitig vollständig von der Halteeinrichtung umgeben sein.

In dem Strömungskanal kann zwischen der Einlassöffnung und dem Messrohr ein einlassseitiges Reflexionselement und zwischen dem Messrohr und der Auslassöffnung ein auslassseitiges Reflexionselement angeordnet sein, wobei das einlassseitige und das auslassseitige Reflexionselement zur Führung von Ultraschallwellen von einem ersten zu einem zweiten Ultraschallwandler dienen, wobei der Strömungsrichter zwischen der Einlassöffnung und dem einlassseitigen Reflexionselement oder zwischen dem auslassseitigem Reflexionselement und der Auslassöffnung angeordnet ist und über die Halteeinrichtung hinausragt. Hierdurch kann vermieden werden, dass der Strömungsrichter die Ausbreitung der Ultraschallwellen im Messbereich stört oder beeinflusst. Falls sowohl einlassals auch auslassseitig Strömungsrichter vorgesehen sind, können diese beide außerhalb des zwischen den Reflexionselementen liegenden Messbereichs angeordnet sein.

Das einlassseitige und/oder das auslassseitige Reflexionselement können, insbesondere formschlüssig mit Haltenasen des jeweiligen Reflexionselements, an der Halteeinrichtung gehaltert oder durch die Halteeinrichtung gebildet sein. In diesem Fall kann die Halteeinrichtung mit den daran oder darin angeordneten Komponenten insgesamt einen Messeinsatz bilden, der, abgesehen von den Ultraschallwandlern, alle messrelevanten Komponenten aufweist und nur noch in das Gehäuse eingeführt werden muss. Das jeweilige Reflexionselement kann an seiner fluidzugewandten Seite bündig mit der Halteeinrichtung abschließen, so dass keine strömungsrelevante Stufe zwischen dem jeweiligen Reflexionselement und der Halteeinrichtung gebildet wird.

Der Strömungsrichter kann die Halteeinrichtung in einem Kopplungsbereich kontaktieren, um die kraftschlüssige oder formschlüssige Verbindung auszubilden, wobei der Kopplungsbereich von den Seitenwänden des Strömungskanals beabstandet ist. Der Kopplungsbereich kann insbesondere im Wesentlichen mittig in dem Strömungsquerschnitt angeordnet sein. Vorzugsweise ist der Kopplungsbereich in Strömungsrichtung stromaufwärts oder stromabwärts von einem jeweiligen Reflexionselement angeordnet. Durch eine Verbindung im Bereich der Mitte des Strömungsquerschnitts resultiert notwendig ein Hindernis für die Strömung in diesem Bereich. Ein Abbremsen der Strömung in dem mittleren Bereich kann vorteilhaft sein, um ein gleichmäßiges Strömungsprofil auszubilden.

Die Halteeinrichtung kann eine erste und eine zweite Haltekomponente umfassen, die kraftschlüssig und/oder formschlüssig miteinander verbunden sind. Die Verbindung kann insbesondere durch ein Verrasten erfolgen. Ein entsprechender zweiteiliger Aufbau ist vorteilhaft, wenn die Halteeinrichtung das Messrohr umfangsseitig vollständig umgreifen soll. Beispielsweise kann das Messrohr in eine Haltekomponente eingelegt werden und durch das Anbringen der zweiten Haltekomponente befestigt bzw. geführt werden. Ähnliches gilt auch für die Reflexionselemente. Diese können beispielsweise in Aufnahmen einer der Halteeinrichtungen eingelegt und durch Zusammenbringen der zwei Halteeinrichtungen gehaltert bzw., falls sie schon an einer der Haltekomponenten gehaltert sind, zusätzlich gesichert werden.

Die erste Haltekomponente kann mindestens ein erstes Rastelement und die zweite Haltekomponente mindestens ein zweites Rastelement aufweisen, die in Umfangsrichtung des Strömungskanals paarweise verrastet sind, um die erste und die zweite Haltekomponente miteinander zu verbinden, wobei das jeweilige erste Rastelement einen Vorsprung in Radialrichtung des Strömungskanals aufweist, der sich in Umfangsrichtung des Strömungskanals bis zu einem der zweiten Haltekomponente zugewandten Ende des jeweiligen ersten Rastelements erstreckt, und wobei das jeweilige zweite Rastelement eine Nut zur Führung des Vorsprungs im Rahmen der Verrastung der jeweiligen Rastelemente aufweist oder umgekehrt. Vorzugsweise sind mehrere Paare von Rastelementen vorgesehen, die die Haltekomponenten verbinden. Die Nut kann insbesondere eine Nut sein, die einen Rasthaken des zweiten Rastelements durchsetzt. Der Vorsprung kann von dem ersten Halteelement in Richtung zur Mitte des Strömungskanals oder in Richtung zur Wand des Strömungskanals hin abragen. Der Vorsprung und die Nut können im Rahmen des Zusammensetzens genutzt werden, um die Haltekomponenten in Längsrichtung des Strömungskanals bzw. des Messrohrs relativ zueinander zu führen. Hierdurch wird ein positionsgenaues Zusammensetzen der Haltekomponenten ohne weitere Hilfsmittel möglich. Es können auch mehrere Vorsprünge oder eine beliebige längliche in Montagerichtung ausgerichtete Kontur genutzt werden. Somit wird eine Führung durch eine Nut-Feder-Verbindung während des Zusammensetzens erreicht.

Die Rastelemente können in einem Hinterraum des Messrohrs, also zwischen dem Messrohr und der Wand des Strömungskanals, angeordnet sein. Dieser Bereich kann fluidisch mit dem Bereich zwischen Messrohr und Auslassöffnung in Verbindung stehen. Beispielsweise kann das Messrohr einlassöffnungsseitig fluiddicht zu der Wand des Strömungskanals abgedichtet sein und im Bereich der Auslassöffnung frei in dem Strömungskanal enden.

Die erste Haltekomponente und der Strömungsrichter können formschlüssig verbunden sein, wobei die erste Haltekomponente und der Strömungsrichter derart ausgebildet sind, dass alleine durch ihre formschlüssige Verbindung ihre relative Lage und Orientierung festgelegt ist. Bei der Montage des Strömungsrichters an der ersten Haltekomponente kann der Strömungsrichter von einem in der Haltekomponente integrierten Mittel, beispielsweise von einem Schnapphaken, gehalten werden, so dass die Bauteile nicht mehr auseinanderfallen können bis die Montage durch Verbindung der ersten mit der zweiten Haltekomponente abgeschlossen ist. Die zweite Haltekomponente kann die Verbindung zwischen der ersten Haltekomponente und dem Strömungsrichter sichern. Beispielsweise kann die Bewegung eines Mittels, beispielsweise eines Schnapphakens, das den Strömungsrichter an der ersten Haltekomponente haltert, durch die Verbindung der ersten Haltekomponente mit der zweiten Haltekomponente beschränkt sein, beispielsweise indem ein Blockadeelement in einen Bewegungsbereich des Mittels eingeführt wird. Somit kann beispielsweise verhindert werden, dass der Strömungsrichter von der ersten Haltekomponente entkoppelt wird, ohne dass zuvor die erste Haltekomponente von der zweiten Haltekomponente entkoppelt wird. Sind die Haltekomponenten zugleich so ausgebildet, dass eine Trennung innerhalb des Strömungskanals nicht möglich ist, wird hierdurch auch sichergestellt, dass der Strömungsrichter nicht von der Halteeinrichtung lösbar ist, während sich diese in dem Strömungskanal befindet.

Die erste und/oder die zweite Haltekomponente und/oder das oder ein Reflexionselement zur Reflexion von Ultraschallwellen können ein Haltemittel aufweisen, durch das das Reflexionselement kraftschlüssig und/oder formschlüssig an der ersten und/oder zweiten Haltekomponente gehaltert wird. Das Halteelement ist insbesondere derart ausgebildet, dass das Reflexionselement bereits vor der Verbindung der ersten mit der zweiten Haltekomponente an der ersten bzw. zweiten Haltekomponente halterbar ist. Dies erleichtert die Herstellung des Durchflusszählers, da das Reflexionselement zunächst an der ersten oder zweiten Haltekomponente befestigt werden kann und nicht, beispielsweise durch ein separates Werkzeug, gehaltert werden muss, bis die Haltekomponenten zusammengefügt werden. Anders ausgedrückt kann das Haltemittel das Reflexionselement so an der ersten bzw. zweiten Haltekomponente fixieren, dass ein Zusammensetzen der Baugruppe ohne weitere Hilfsmittel möglich ist.

Das Reflexionselement kann durch die Halteeinrichtung oder die erste und/oder zweite Haltekomponente derart gehaltert werden, dass eine bündige Oberfläche resultiert. Hierdurch kann die Strömungsführung im Bereich des Reflexionselements verbessert werden.

Die kraftschlüssige oder formschlüssige Verbindung kann zwischen dem oder einem Kopplungsbereich der Halteeinrichtung oder der ersten und/oder der zweiten Haltekomponente und einem Kopplungsabschnitt des Strömungsrichters gebildet sein, wobei der Kopplungsbereich und der Kopplungsabschnitt derart ausgebildet sind, dass der Strömungsrichter in genau einer Orientierung mit der Halteeinrichtung oder der ersten und/oder der zweiten Haltekomponente verbindbar ist. Dies bedeutet, dass im Fall einer Trennung ein Zusammenbau nur mit der gleichen relativen Orientierung möglich wäre. Hierdurch wird erreicht, dass im Rahmen der Herstellung des Durchflusszählers bereits durch die entsprechende Ausgestaltung der Komponenten genau eine mögliche Ausrichtung zwischen dem Strömungsrichter und der Halteeinrichtung vorgegeben wird. Somit kann im Rahmen der Herstellung das sogenannte "Poka-Yoke"-Prinzip umgesetzt werden, gemäß dem Fehler durch eine entsprechende technische Ausgestaltung des Herstellungsprozesses bzw. der im Rahmen des Herstellungsprozesses genutzten Komponenten verhindert werden.

Der Strömungsrichter kann in der Art ausgebildet sein, dass eine von dem Messrohr abgewandte Vorderfläche des Strömungsrichters weder rotationssymmetrisch noch drehsymmetrisch ist. Unter einer Drehsymmetrie ist hierbei eine Symmetrie zu verstehen, bei der die Vorderfläche bei einer Rotation um einen bestimmten Winkel von weniger als 360° wieder auf sich selbst abgebildet würde. Der Strömungsrichter weist insbesondere mehrere Durchbrechungen auf, die alle innerhalb einer Randwand liegen, die den Strömungsrichter in Umfangsrichtung, insbesondere im Wesentlichen rotationssymmetrisch, umläuft. Die einzelnen Durchbrechungen können durch eine Durchbrechungswandanordnung separiert sein, die keine Rotationssymmetrie oder Drehsymmetrie aufweist. Die Durchbrechungswandanordnung kann den Strömungsquerschnitt insbesondere in mehrere Kreissegmente unterteilen und diese in weitere Teilsegmente unterteilen. Die Unterteilung in weitere Teilsegmente kann beispielsweise dadurch erfolgen, dass eine zusätzliche Wand in Form eines inneren Rings vorgesehen ist. Hierbei kann die Wandform in einem oder in mehreren Segmenten von dieser Ringform abweichen, um die Rotations- bzw. Drehsymmetrie zu brechen.

Die Vermeidung einer Rotations- und Drehsymmetrie der Vorderfläche dient insbesondere zur Umsetzung des bereits erläuterten Poka-Yoke-Prinzips. Soll ein zusammengesetzter Messeinsatz, der beispielsweise die Halteeinrichtung, das Messrohr und den Strömungsrichter umfasst, beispielsweise von Seiten der Einlassöffnung in das Gehäuse eingesetzt werden und soll der Strömungsrichter zwischen Einlassöffnung und Messrohr angeordnet sein, so kann der Messeinsatz hierzu an dem Strömungsrichter durch einen Montagestempel gegriffen werden. Durch eine Abstimmung des Montagestempels auf die Form der Vorderfläche kann aufgrund der gebrochenen Rotations- und Drehsymmetrie eine eindeutige Orientierung des Montagestempels zu dem Strömungsrichter und somit zu dem gesamten Messeinsatz erreicht werden, wenn der Montagestempel am Strömungsrichter angreift. Somit ist es im Rahmen des Montageprozesses nur noch erforderlich eine definierte Ausrichtung des Gehäuses zu dem Montagestempel festzulegen um den Messeinsatz mit einer definierten Orientierung in das Gehäuse einzubringen. Mögliche Fehlorientierungen durch ein falsches Greifen des Strömungsrichters durch einen Montagestempel können somit verhindert werden.

Die Halteeinrichtung kann wenigstens einen Vorsprung aufweisen, der in eine Ausnehmung einer Seitenwand des Strömungskanals eingreift oder umgekehrt und/oder der Strömungskanal kann auslassseitig einen Absatz aufweisen, an der die Halteeinrichtung anliegt. Die Ausnehmung kann in Umfangsrichtung des Strömungskanals umlaufen, womit der Eingriff des Vorsprungs in die Ausnehmung ausschließlich zur Festlegung der Position der Halteeinrichtung in Längsrichtung des Strömungskanals dienen kann. Vorzugsweise ist die Ausnehmung jedoch in Umfangsrichtung begrenzt, so dass auch eine relative Rotation der Halteeinrichtung zu dem Strömungskanal verhindert wird. Der Vorsprung kann insbesondere durch ein elastisches Rastelement ausgebildet sein, das in die Ausnehmung eingreift. Wird die Halteeinrichtung, insbesondere mit daran angeordnetem Messrohr und Strömungsrichter, mit der richtigen Ausrichtung in den Strömungskanal eingeschoben, so rastet das Rastelement in die Ausnehmung ein und befestigt somit die Halteeinrichtung und somit auch das Messrohr und den Strömungsrichter in der korrekten Ausrichtung in dem Strömungskanal. Alternativ oder ergänzend kann die Position der Halteeinrichtung in Längsrichtung des Strömungskanals dadurch festgelegt werden, dass sie auf dem Absatz aufsitzt.

Eine relative Verschiebung und/oder Rotation des Messrohrs bezüglich der Halteeinrichtung kann durch Blockiermittel des Messrohrs und/oder der Halteeinrichtung blockiert sein. Beispielsweise kann das Messrohr einen Kragen aufweisen, der an einem Rand der Halteeinrichtung anliegt. Durch eine Formgebung des Kragens und durch Streben bzw. Vorsprünge der Halteeinrichtung, kann eine relative Rotation zwischen Messrohr und Halteeinrichtung blockiert werden.

Die Blockiermittel können in Umfangsrichtung des Messrohrs derart angeordnet sein, dass sie genaue eine Sollorientierung des Messrohrs bezüglich der Halteeinrichtung vorgeben. Durch eine ungleichmäßige Verteilung der Blockiermittel in Umfangsrichtung des Strömungskanals bzw. der Halteeinrichtung kann eine Rotations- bzw. Drehsymmetrie gebrochen werden, wodurch eine Anordnung des Messrohrs an der Halteeinrichtung nur in der Sollorientierung möglich sein kann. Hierdurch wird auch bezüglich der relativen Orientierung von Messrohr und Halteeinrichtung das Poka-Yoke-Prinzip umgesetzt.

Der Strömungsquerschnitt des Messrohrs kann nicht rotationssymmetrisch sein. Beispielsweise kann die Seitenwand des Messrohrs ein Wellenprofil aufweisen, das Messrohr kann in bestimmten Abschnitten des Umfangs früher enden oder verlängert sein oder Ähnliches. In diesen Fällen ist eine exakte Festlegung der Orientierung des Messrohrs bezüglich des Strömungskanals und des Strömungsrichters wesentlich, was durch das oben beschriebene Vorgehen zuverlässig und ohne Fehlermöglichkeit bei der Zusammensetzung des Durchflusszählers umgesetzt werden kann.

Die Halteeinrichtung kann wenigstens ein Zentriermittel aufweisen, das sich an der Wand des Strömungskanals abstützt und/oder zwischen der Halteeinrichtung und der Wand des Strömungskanals kann wenigstens ein Zentriermittel angeordnet sein, wobei das Zentriermittel durch die Wand des Strömungskanals elastisch vorgespannt ist. Hierdurch kann eine definierte Lage der Halteeinrichtung und der daran angeordneten Komponenten bezüglich des Strömungskanals vorgegeben werden. Das Zentriermittel kann beispielsweise einen O-Ring aus einem Elastomer sein, der die Halteeinrichtung umfangsseitig umläuft bzw. in dem Messrohr angeordnet ist. Vorzugsweise sind die Zentriermittel jedoch Teil der Halteeinrichtung.

Die Halteeinrichtung kann mehrere in Umfangsrichtung des Strömungskanals beabstandete elastisch verformbare Federelemente als Zentriermittel aufweisen, die durch ihre Rückstellkraft einen jeweiligen Anlageabschnitt gegen die Wand des Strömungskanals drücken. Durch die Ausbildung der Zentriermittel als Teil der Halteeinrichtung kann der Aufwand zum Zusammenfügen des Durchflusszählers weiter verringert werden.

Neben dem erfindungsgemäßen Durchflusszähler betrifft die Erfindung ein Verfahren zur Herstellung eines Durchflusszählers zur Erfassung einer Durchflussmenge eines Fluids, umfassend die Schritte:
- Bereitstellen eines Gehäuses mit einem Strömungskanal, durch den das Fluid von einer Einlassöffnung des Gehäuses zu einer Auslassöffnung des Gehäuses führbar ist, eines Messrohrs, eines Strömungsrichters, der wenigstens eine von dem Fluid durchströmbare Durchbrechung aufweist, und einer Halteeinrichtung oder zweier Haltekomponenten, aus denen die Halteeinrichtung zusammengesetzt wird, als separate Bauteile,
- Anbringen des Messrohrs und des Strömungsrichters an der Halteeinrichtung, wobei der Strömungsrichter durch eine kraftschlüssige oder formschlüssige Verbindung an der Halteeinrichtung befestigt wird,
- Einsetzen der Halteeinrichtung mit dem daran befestigten Messrohr und Strömungsrichter in den Strömungskanal des Gehäuses derart, dass der Strömungsrichter zwischen der Einlassöffnung und dem Messrohr oder zwischen dem Messrohr und der Auslassöffnung angeordnet wird und dass der Strömungsquerschnitt des Strömungskanals in einem Abschnitt durch das Messrohr verengt wird.

Das erfindungsgemäße Verfahren kann mit den zum erfindungsgemäßen Durchflusszähler erläuterten Merkmalen mit den dort genannten Vorteilen weiter gebildet werden.

Der Strömungsrichter kann an der Halteeinrichtung befestigt werden, indem der Strömungsrichter zunächst mit der ersten Haltekomponente verbunden wird. Insbesondere kann der Strömungsrichter kraftschlüssig oder formschlüssig mit der Haltekomponente verbunden werden. Die Verbindung kann derart erfolgen, dass die relative Lage und Orientierung des Strömungsrichters bezüglich der ersten Haltekomponente durch die Verbindung eindeutig festgelegt ist. Anschließend kann die zweite Haltekomponente mit der ersten Haltekomponente verbunden werden. Hierdurch kann optional die Verbindung der ersten Haltekomponente mit dem Strömungsrichter gesichert werden, wie dies bereits zum erfindungsgemäßen Durchflusszähler erläutert wurde.

Das Messrohr kann mit der Halteeinrichtung verbunden werden, indem es zunächst in die erste oder zweite Haltekomponente eingelegt oder mit dieser kraft- oder formschlüssig verbunden wird, wonach die Haltekomponenten verbunden werden.

Wird ein Durchflusszähler mit Reflexionselementen zur Reflexion von Ultraschallwellen hergestellt, so ist es möglich, diese Reflexionselemente als Teil der Halteeinrichtung auszubilden. Vorzugsweise werden die Reflexionselemente jedoch ebenfalls als separate Komponenten hergestellt und im Rahmen der Herstellung des Durchflusszählers mit der Halteeinrichtung gekoppelt. Hierzu kann die erste und/oder die zweite Haltekomponente eine Ausnehmung aufweisen, in die das Reflexionselement einlegbar ist. Insbesondere ist das Reflexionselement nach dem Einlegen in die Ausnehmung kraft- oder formschlüssig mit dieser Haltekomponente verbunden, so dass ohne eine weitere Sicherung des Reflexionselements die Montage fortgesetzt werden kann. Dies kann beispielsweise dadurch erfolgen, dass an dem Reflexionselement ein Rastelement, beispielsweise ein Rasthaken, vorgesehen ist, der an der ersten bzw. zweiten Haltekomponente einrastet oder umgekehrt. Die Ausnehmung kann derart ausgebildet sein, dass das Reflexionselement gegen wenigstens eine Haltenase der Haltekomponente gedrückt wird und mit dieser eine bündige Oberfläche ausbildet. Nach dem Einlegen bzw. Haltern des Reflexionselements kann dieses im Rahmen des Zusammensetzens der Haltekomponenten gesichert werden, beispielsweise in dem es in Ausnehmungen beider Haltekomponenten eingreift.

Durch dieses Anbringen des Messrohrs und des Strömungsrichters und optional von Reflexionselementen an der Halteeinrichtung wird ein Messeinsatz ausgebildet, der am Stück in den Strömungskanal des Messrohrs eingesetzt werden kann. Hierzu kann der Messeinsatz durch einen Montagestempel an Strömungsrichter gegriffen werden. Hierzu ist es besonders vorteilhaft, wenn dessen Vorderseite, wie vorangehend erläutert, weder eine Rotations- noch eine Drehsymmetrie aufweist, so dass er nur in einer definierten Orientierung vom Montagestempel gegriffen werden kann.

Um die relative Lage des Messeinsatzes zu dem Strömungskanal festzulegen, kann ein elastisch verformbarer Vorsprung, beispielsweise ein Schnappriegel, verwendet werden, der an der Halteeinrichtung angeordnet ist und in eine Ausnehmung der Wand des Strömungskanals eingreift. Hierdurch ist die Halteeinrichtung und somit der gesamte Messeinsatz nach dem Einführen in den Strömungskanal automatisch gesichert und die Montage des Messrohrs, des Strömungsrichters und optional des Reflexionselements ist abgeschlossen. Die Montage des Durchflusszählers kann nun abgeschlossen werden, indem Ultraschallwandler in oder am Gehäuse angeordnet werden und eine zugehörige Steuerelektronik sowie Bedien- und/oder Auslesemittel angebracht werden.

Weitere Vorteile und Einzelheiten der Erfindung ergeben sich aus dem erfolgten Ausführungsbeispiel sowie den zugehörigen Zeichnungen:
- Fig. 1: eine geschnittene Ansicht eines Ausführungsbeispiel eines erfindungsgemäßen Durchflusszählers, wobei aus Übersichtlichkeitsgründen das Messrohr nicht eingezeichnet ist,
- Fig. 2: den in dem Durchflusszähler gemäß Fig. 1 genutzten Strömungsrichter,
- Fig. 3: eine geschnittene Detailansicht, die die Befestigung des Strömungsrichters in dem Durchflusszähler gemäß Fig. 1 zeigt,
- Fig. 4: eine geschnittene Detailansicht des Durchflusszählers gemäß Fig. 1, die die Anordnung des Messrohrs in einer Halteeinrichtung zeigt,
- Fig. 5 und 6: Rastelemente zur Verbindung von Haltekomponenten der Halteeinrichtung im Durchflusszähler gemäß Fig. 1, und
- Fig. 7: eine Explosionszeichnung, die schematisch die Halterung eines Reflexionselements an der Haltekomponente in dem Durchflusszähler gemäß Fig. 1 zeigt.

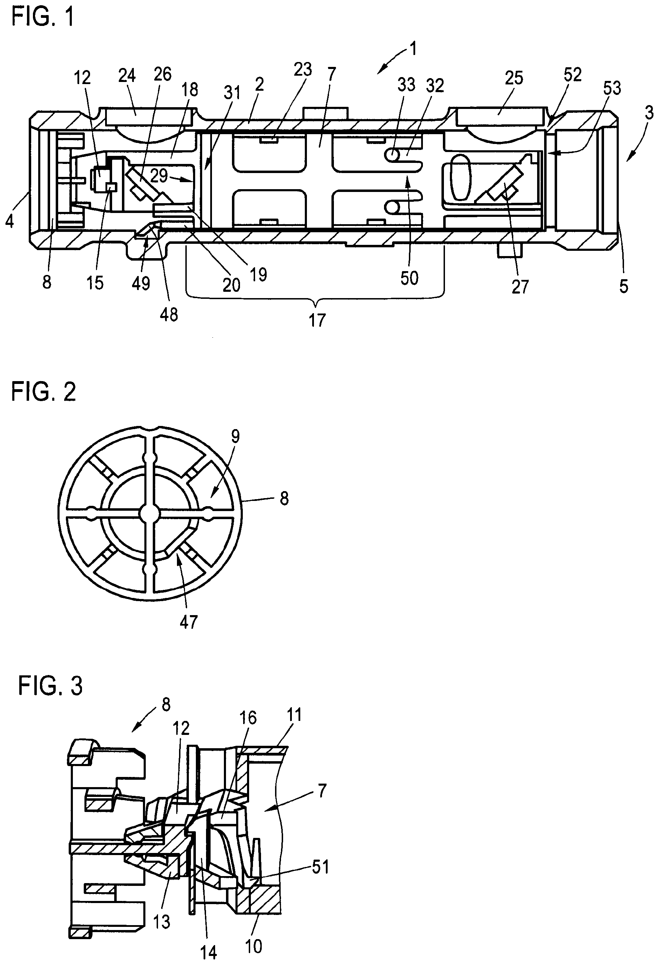

Fig. 1 zeigt einen Durchflusszähler 1 zur Erfassung einer Durchflussmenge eines Fluids. Ein Gehäuse 2 des Durchflusszählers weist einen von dem Fluid durchströmbaren Strömungskanal 3 auf, der sich von einer Einlassöffnung 4 bis zu einer Auslassöffnung 5 erstreckt. Der Durchflusszähler 1 ist ein Ultraschallzähler. Hierbei werden Ultraschallwellen durch einen ersten Ultraschallwandler 24 ausgestrahlt und durch einen zweiten Ultraschallwandler 25 empfangen und umgekehrt. Aus einem Laufzeitunterschied kann eine Durchflussgeschwindigkeit und somit, bei bekanntem Strömungsquerschnitt, eine Durchflussmenge berechnet werden. Die Steuerung der Ultraschallzähler 24, 25 und die Messdatenerfassung und Verarbeitung erfolgt durch eine nicht gezeigte Steuereinrichtung. Um die Ultraschallwellen im Wesentlichen parallel zur Strömungsrichtung durch den Strömungskanal zu führen, weist der Durchflusszähler 1 zu dem Reflexionselemente 26, 27 auf.

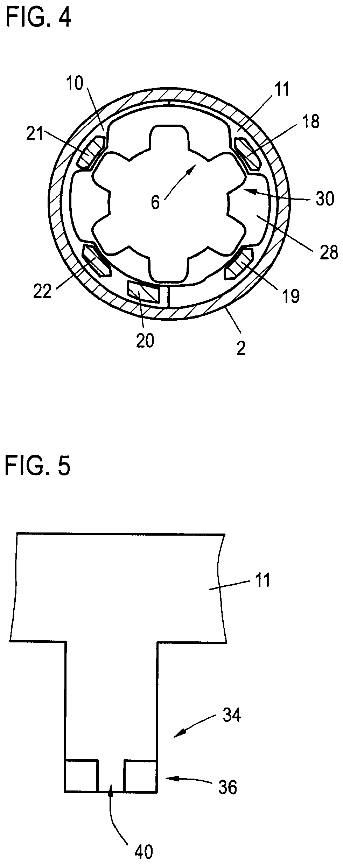

Um eine genauere Messung des Durchflusses zu ermöglichen, weist der Durchflusszähler 1 ein Messrohr 6 auf, das den Strömungsquerschnitt in einem Abschnitt 17 des Strömungskanals 3 verengt. Aus Übersichtlichkeitsgründen ist das Messrohr 6 in Fig. 1 nicht dargestellt. Stattdessen zeigt Fig. 4 eine Detailansicht, die die Halterung des Messrohrs 6 durch eine Halteeinrichtung 7 darstellt. Dies wird später noch detailliert erläutert werden.

Der Durchflusszähler 1 kann dazu dienen, einen Wasserdurchfluss zu messen. Dabei ist es wesentlich, dass er eine hohe Robustheit gegenüber inneren und äußeren Störeinflüssen besitzt. Um Störungen am Einfluss abzumildern und das Strömungsprofil zu richten, weist der Durchflusszähler 1 einen Strömungsrichter 8 auf. Dieser ist im Detail in Fig. 2 dargestellt. Der Strömungsrichter 8, der auch als Sieb bezeichnet werden kann, erstreckt sich im Wesentlichen über den gesamten Strömungsquerschnitt des Strömungskanals 3 und unterteilt diesen durch seine mehreren Durchbrechungen 9 in verschiedene Teilströmungsbereiche.

Der Messeinsatz, der die Halteeinrichtung 7, die daran angeordneten Reflexionselemente 26, 27, das Messrohr 6 und den Strömungsrichter 8 umfasst, kann prinzipiell in verschiedenen Gehäusen 2 genutzt werden. Um sicherzustellen, dass auch bei unterschiedlichen Gehäuselängen der Strömungsrichter 8 eine definierte Lage bezüglich der Halteeinrichtung 7 und somit bezüglich des Messrohrs 6 aufweist, ist der Strömungsrichter 8 formschlüssig an der Halteeinrichtung 7 befestigt. Dies ist im Detail in Fig. 3 dargestellt, die eine geschnittene Ansicht der Halteeinrichtung 7 und des Strömungsrichters 8 zeigt. Wie später noch detailliert erläutert werden wird, umfasst die Halteeinrichtung 7 zwei Haltekomponenten 10, 11, die im Bereich des Messrohrs 6 jeweils näherungsweise einen Halbzylinder ausbilden. In Fig. 1 ist die Haltekomponente 11 dem Betrachter zugewandt, während in Fig. 3 die Haltekomponente 10 dem Betrachter zugewandt ist.

Der Strömungsrichter 8 wird zunächst an der Haltekomponente 10 befestigt. Hierzu weist der Strömungsrichter 8 einen Kopplungsabschnitt 12 auf, der im Querschnitt betrachtet im Wesentlichen mittig an dem Strömungsrichter 8 angeordnet ist und in Richtung des Messrohrs von dem Strömungsrichter 8 absteht. Dieser wird im Einbauzustand von den Kopplungsbereichen 13, 14, die in Fig. 3 dargestellt sind, und von dem Kopplungsbereich 15, der in Fig. 1 dargestellt ist, kontaktiert. Der Kopplungsbereich 14 ist hierbei als Schnapphaken ausgebildet, so dass der Strömungsrichter 8 an der Haltekomponente 10 verrastet. Nach der Verrastung ist, da der Kopplungsabschnitt 12 durch die Kopplungsbereiche 13, 14, 15 allseitig abgestützt ist, die relative Lage und Orientierung des Strömungsrichters 8 zu der Haltekomponente 10 fest vorgegeben.

Diese Verbindung kann zusätzlich gesichert werden, wenn, wie später noch detailliert erläutert werden wird, die beiden Haltekomponenten 10, 11 verbunden werden. Nach der Verbindung hintergreift der Abschnitt 16 der zweiten Haltekomponente 11 den Kopplungsbereich 14 der Halteeinrichtung, also den Schnapphaken, und schränkt damit dessen Beweglichkeit ein. Hierdurch kann die Rastverbindung zwischen dem Strömungsrichter 8 und der ersten Haltekomponente 10 nicht aufgehoben werden, ohne zuvor die Haltekomponenten 10, 11 zu trennen. Dies ist aufgrund der Halbzylinderform der Haltekomponenten 10, 11 innerhalb des Gehäuses 2 nicht möglich, so dass der Strömungsrichter 8 zuverlässig gegen eine Trennung von der Halteeinrichtung 7 gesichert wird. Zur zuverlässigen Sicherung der Verbindung der Haltekomponenten 10, 11 kann in dem Bereich 51 zudem eine zusätzliche Verrastung erfolgen.

Fig. 4 zeigt die Anordnung des Messrohrs 6 an der Halteeinrichtung 7. Vorzugsweise wird das Messrohr 6 vor dem Zusammenfügen der Haltekomponenten 10, 11 in eine dieser Haltekomponenten eingelegt und durch die Verbindung der Haltekomponenten 10, 11 form- oder kraftschlüssig arretiert. Die Lage des Messrohrs 6 in die Strömungsrichtung des Durchflusszählers 1 ist dadurch festgelegt, dass ein Kragen 28 des Messrohrs auf dem in Fig. 1 gezeigten Rand 29 der Halteeinrichtung 7 aufliegt. Da das Messrohr aufgrund der Ausnehmungen 30, die zur Verbesserung des Strömungsverhaltens vorgesehen sind, nicht rotationssymmetrisch ist, wird durch den Aufbau des Messrohrs 6 und der Halteeinrichtung 7 sichergestellt, dass das Messrohr 6 nur in einer definierten Lage an der Halteeinrichtung 7 anbringbar ist und auch in dieser Lage gesichert ist. Um dies zu erreichen weist der Kragen 28 Ausnehmungen auf, die den Positionen der Blockiermittel 18 bis 22 der Halteeinrichtung 7 entsprechen. Die Blockiermittel 18 bis 22 sind durch Streben der Halteeinrichtung 7 gebildet, die durch die Ausnehmungen des Kragens 28 geführt sind.

Um das Messrohr 6 einflussseitig abzudichten, weist die Halteeinrichtung 7 eine umlaufende Nut 31 auf, in die ein nicht gezeigter O-Ring aus einem Elastomer eingelegt ist, um die Halteeinrichtung 7 und somit auch das Messrohr 6 einlassseitig abzudichten, so dass der Hinterraum des Messrohrs, der das Messrohr umgibt, ausschließlich über das Messrohr 6 mit der Einlassöffnung 4 verbunden ist. Dieser O-Ring dient gleichzeitig zur Zentrierung der Halteeinrichtung 7 und somit des Messrohrs an der Einlassseite. Zur Zentrierung der Halteeinrichtung und somit des Messrohrs an der Auslassseite sind an der Halteeinrichtung 7 mehrere formbare Federelemente 32 als Zentriermittel 50 vorgesehen, die nach dem Anordnen der Halteeinrichtung in dem Gehäuse 2 durch die Seitenwand des Strömungskanals 3 vorgespannt sind, indem jeweilige Anlageabschnitte 33 gegen die Wand des Strömungskanals drücken.

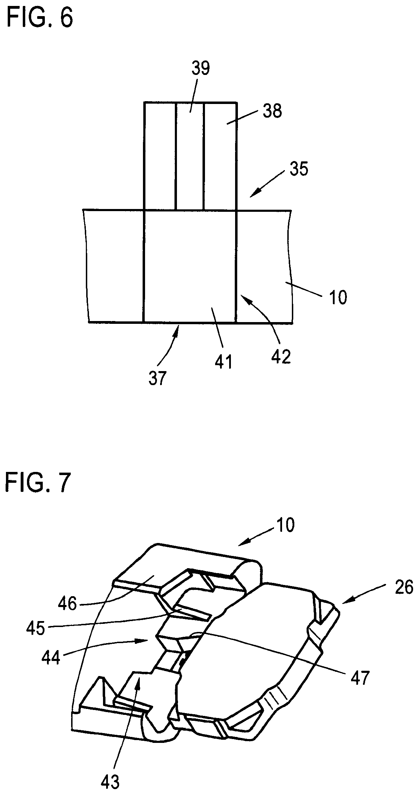

Nachdem der Strömungsrichter 8, das Messrohr 6 und die Reflexionselemente 26 an den Haltekomponenten 10, 11 angeordnet sind, können diese miteinander verbunden werden. Die Verbindung der Haltekomponenten 10, 11 zu der Halteeinrichtung 7 erfolgt durch die vier in Fig. 1 gezeigten Rastverbindungen 23. Hierbei verrastet jeweils ein Rastelement 34 der Haltekomponente 11 mit einem Rastelement 35 in der Haltekomponente 10. Diese Elemente sind in Fig. 5 und 6 dargestellt, wobei Fig. 5 die radial innenliegende Seite des Rastelements 34 und Fig. 6 die radial außen liegende Seite des Rastelements 35 zeigt. Die Verrastung erfolgt, indem ein Rasthaken 36 in Umfangsrichtung geführt wird, bis er an der Kante 37 einrastet. Hierbei wird der Rasthaken 36 zunächst entlang einer schrägen Ebene 38 geführt, um ihn anzuheben. Die Führung erfolgt hierbei, indem der Vorsprung 39 durch die Nut 40 geführt wird. Sobald der Rasthaken 36 das Plateau 41 erreicht, wird er durch seitliche angehobene Bereiche 42 weitergeführt. Diese Anordnung ermöglicht eine einfache lagerichtige Montage der Haltekomponenten 10, 11 aneinander ohne zusätzliche Werkzeuge zu benötigen.

Die Reflexionselemente 26, 27 können prinzipiell als Teil der Halteeinrichtung 7 ausgebildet zu sein. Vorzugsweise werden sie jedoch zunächst als separate Bauteile gefertigt, um anschließend an der Halteeinrichtung 7 bzw. zumindest einer der Haltekomponenten 10, 11 befestigt werden. Hierzu weist die Halteeinrichtung 10, wie in Fig. 7 dargestellt ist, ein Haltemittel 43, nämlich eine Ausnehmung, zur Aufnahme des Reflexionselements 26 auf. Das Reflexionselement 26 kann in diese Ausnehmung eingeschoben werden und dort kraft- oder formschlüssig gehaltert werden. Ein Formschluss kann beispielsweise dadurch erreicht werden, dass ein nicht gezeigter Rasthaken bzw. eine nicht gezeigte Haltenase des Reflexionselements 26 entlang der Rampe 47 angehoben wird, um sich an der Kante 44 zu verhaken. Durch die Rampen 45 kann das Reflexionselement 26 gegen Rückhaltelemente 46 gepresst werden, die vorzugsweise so auf dem Reflexionselement 46 aufliegen, dass eine bündige Oberfläche resultiert.

Es ist möglich, dass nach dem Zusammensetzen der Haltekomponenten 10, 11 ausschließlich die Haltekomponente 10 das Reflexionselement 26 haltert. Vorzugsweise wird das Reflexionselement 26 jedoch zusätzlich durch ein Halteelement der Haltekomponente 11 gegen eine Herausnahme gestützt bzw. gehaltert.

Nachdem das Messrohr 6, der Strömungsrichter 8 und optional die Reflexionselemente 26, 27 an den Haltekomponenten 10, 11 angeordnet sind und diese zur Halteeinrichtung 7 zusammengesetzt sind, liegt ein einfach handhabbarer Messeinsatz vor, der am Stück in das Gehäuse 2 bzw. in den Strömungskanal 3 eingeschoben werden kann. Erfolgt eine Einführung von Seiten der Einlassöffnung 4, so ist im Rahmen der Einführung eine Handhabung nur von Seiten des Strömungsrichters 8 möglich. Dieser kann durch einen Montagestempel von seiner in Fig. 2 gezeigten Frontseite her gegriffen werden, um den Messeinsatz in den Strömungskanal 3 einzuführen. Um hierbei sicherzustellen, dass der Messeinsatz in der richtigen Ausrichtung eingeführt wird, ist die Drehsymmetrie des Strömungsrichters 8, wie in Fig. 2 dargestellt ist, durch den geraden Wandabschnitt 47 gebrochen, womit bei einer entsprechenden Ausgestaltung des Montagestempels ein Greifen des Strömungsrichters 8 und somit des Messeinsatzes nur in einer definierten Orientierung bezüglich des Montagestempels möglich ist.

Um den Messeinsatz nach dem Einführen in das Gehäuse 2 in einer definierten Position und Ausrichtung zu halten, weist das Gehäuse 2 eine Vertiefung 49 auf, in die ein Vorsprung 48 der Halteeinrichtung 7 eingreifen kann. Durch die Lagerung an einer biegbaren Strebe ist der Vorsprung 48 elastisch biegbar und bildet somit eine Rastnase aus, die, sobald sich die Halteeinrichtung 7 und somit der gesamte Messeinsatz in der richtigen Position befindet, einrastet. Die Position des Messeinsatzes wird zudem dadurch stabilisiert, dass eine Kante 53 der Halteeinrichtung 7 auf einem in dem Strömungskanal auslassseitig ausgebildeten Absatz 52 aufsitzt.

Vor oder nach dem Einbringen des Messeinsatzes können die Ultraschallwandler 24, 25 an dem Gehäuse 2 angeordnet werden und es können eine Steuereinrichtung und Anzeige- und Bedienmittel ergänzt werden, um den Durchflusszähler 1 fertigzustellen. Der beschriebene Aufbau des Durchflusszählers 1 ermöglicht somit einen besonders einfachen Aufbau eines hochwertigen Durchflusszählers 1.

### Bezugszeichenliste

- 1: Durchflusszähler
- 2: Gehäuse
- 3: Strömungskanal
- 4: Einlassöffnung
- 5: Auslassöffnung
- 6: Messrohr
- 7: Halteeinrichtung
- 8: Strömungsrichter
- 9: Durchbrechung
- 10: Haltekomponente
- 11: Haltekomponente
- 12: Kopplungsabschnitt
- 13: Kopplungsbereich
- 14: Kopplungsbereich
- 15: Kopplungsbereich
- 16: Abschnitt
- 17: Abschnitt
- 18: Blockiermittel
- 19: Blockiermittel
- 20: Blockiermittel
- 21: Blockiermittel
- 22: Blockiermittel
- 23: Rastverbindung
- 24: Ultraschallwandler
- 25: Ultraschallwandler
- 26: Reflexionselement
- 27: Reflexionselement
- 28: Kragen
- 29: Rand
- 30: Ausnehmung
- 31: Nut
- 32: Federelement
- 33: Anlageabschnitt
- 34: Rastelement
- 35: Rastelement
- 36: Rasthaken
- 37: Kante
- 38: Ebene
- 39: Vorsprung
- 40: Nut
- 41: Plateau
- 42: Bereich
- 43: Haltemittel
- 44: Kante
- 45: Rampe
- 46: Rückhalteelement
- 47: Rampe
- 48: Vorsprung
- 49: Ausnehmung
- 50: Zentriermittel
- 51: Bereich
- 52: Absatz
- 53: Kante

## Patentansprüche

1. Durchflusszähler zur Erfassung einer Durchflussmenge eines Fluids, umfassend ein Gehäuse (2) mit einem Strömungskanal (3), durch den das Fluid von einer Einlassöffnung (4) des Gehäuses (2) zu einer Auslassöffnung (5) des Gehäuses (2) führbar ist, ein Messrohr (6), das in den Strömungskanal (3) eingesetzt ist und den Strömungsquerschnitt in einem Abschnitt (17) des Strömungskanals (3) verengt, und eine Halteeinrichtung (7), durch die das Messrohr (6) an dem Gehäuse (2) gehaltert ist, wobei zwischen der Einlassöffnung (4) und dem Messrohr (6) und/oder zwischen dem Messrohr (6) und der Auslassöffnung (5) ein jeweiliger Strömungsrichter (8) angeordnet ist, der wenigstens eine von dem Fluid durchströmbare Durchbrechung (9) aufweist, wobei der Strömungsrichter (8) als separates Bauteil ausgebildet ist, das durch eine formschlüssige Verbindung an der Halteeinrichtung (7) befestigt ist, **dadurch gekennzeichnet, dass** die Halteeinrichtung (7) eine erste und eine zweite Haltekomponente (10, 11) umfasst, die kraftschlüssig und/oder formschlüssig miteinander verbunden sind, wobei die erste Haltekomponente (10) und der Strömungsrichter (8) formschlüssig verbunden sind, wobei die erste Haltekomponente (10) und der Strömungsrichter (8) derart ausgebildet sind, dass alleine durch ihre formschlüssige Verbindung ihre relative Lage und Orientierung festgelegt ist.

2. Durchflusszähler nach Anspruch 1, **dadurch gekennzeichnet, dass** in dem Strömungskanal (3) zwischen der Einlassöffnung (4) und dem Messrohr (6) ein einlassseitiges Reflexionselement (26) und zwischen dem Messrohr (6) und der Auslassöffnung (5) ein auslassseitiges Reflexionselement (27) angeordnet sind, wobei das einlassseitige und das auslassseitige Reflexionselement (26, 27) zur Führung von Ultraschallwellen von einem ersten zu einem zweiten Ultraschallwandler (24, 25) dienen, wobei der Strömungsrichter (8) zwischen der Einlassöffnung (4) und dem einlassseitigen Reflexionselement (26) oder zwischen dem auslassseitigen Reflexionselement (27) und der Auslassöffnung (5) angeordnet ist und in Längsrichtung des Strömungskanals (3) über die Halteeinrichtung (7) hinausragt.

3. Durchflusszähler nach Anspruch 2, **dadurch gekennzeichnet, dass** das einlassseitige und/oder das auslassseitige Reflexionselement (26, 27), insbesondere formschlüssig mit Haltenasen des jeweiligen Reflexionselements (26, 27), an der Halteeinrichtung (7) gehaltert oder durch die Halteeinrichtung (7) gebildet sind.

4. Durchflusszähler nach einem der vorangehenden Ansprüche, **dadurch gekennzeichnet, dass** der Strömungsrichter (8) die Halteeinrichtung (7) in einem Kopplungsbereich (13, 14, 15) kontaktiert, um die kraftschlüssige oder formschlüssige Verbindung auszubilden, wobei der Kopplungsbereich (13, 14, 15) von den Seitenwänden des Strömungskanals (3) beabstandet ist.

5. Durchflusszähler nach einem der vorangehenden Ansprüche, **dadurch gekennzeichnet, dass** die erste Haltekomponente (10) mindestens eine erstes Rastelement (35) und die zweite Haltekomponente (11) mindestens eine zweites Rastelement (34) aufweisen, die paarweise in Umfangsrichtung des Strömungskanals (3) verrastet sind, um die erste und die zweite Haltekomponente (10, 11) miteinander zu verbinden, wobei das jeweilige erste Rastelement (35) einen Vorsprung (39) in Radialrichtung des Strömungskanals (3) aufweist, der sich in Umfangsrichtung des Strömungskanals (3) bis zu einem der zweiten Haltekomponente (11) zugewandten Ende des jeweiligen ersten Rastelements (35) erstreckt, und wobei das jeweilige zweite Rastelement (34) eine Nut (40) zur Führung des Vorsprungs (39) im Rahmen der Verrastung der jeweiligen Rastelemente (34, 35) aufweist oder umgekehrt.

6. Durchflusszähler nach einem der vorangehenden Ansprüche, **dadurch gekennzeichnet, dass** die ersten und/oder die zweiten Haltekomponente (10, 11) und/oder das oder ein Reflexionselement (26, 27) zur Reflexion von Ultraschallwellen ein Haltemittel 43) aufweist, durch das das Reflexionselement (26, 27) kraftschlüssig und/oder formschlüssig an der ersten und/oder der zweiten Haltekomponente (10, 11) gehaltert wird.

7. Durchflusszähler nach einem der vorangehenden Ansprüche, **dadurch gekennzeichnet, dass** die kraftschlüssige oder formschlüssige Verbindung zwischen dem oder einem Kopplungsbereich (13, 14, 15) der Halteeinrichtung (7) oder der ersten und/oder zweiten Haltekomponente (10, 11) und einem Kopplungsabschnitt (12) des Strömungsrichters (8) gebildet ist, wobei der Kopplungsbereich (13, 14, 15) und der Kopplungsabschnitt (12) derart ausgebildet sind, dass der Strömungsrichter (8) in genau einer Orientierung mit der Halteeinrichtung (7) oder der ersten und/oder zweiten Haltekomponente (10, 11) verbindbar ist.

8. Durchflusszähler nach einem der vorangehenden Ansprüche, **dadurch gekennzeichnet, dass** eine von dem Messrohr (6) abgewandte Vorderfläche des Strömungsrichters (8) weder rotationssymmetrisch noch drehsymmetrisch ist.

9. Durchflusszähler nach einem der vorangehenden Ansprüche, **dadurch gekennzeichnet, dass** die Halteeinrichtung (7) wenigstens einen Vorsprung (48) aufweist, der in eine Ausnehmung (49) einer Seitenwand des Strömungskanals (3) eingreift oder umgekehrt, und/oder dass der Strömungskanal (3) auslassseitig einen Absatz (52) aufweist, an dem die Halteeinrichtung (7) anliegt.

10. Durchflusszähler nach einem der vorangehenden Ansprüche, **dadurch gekennzeichnet, dass** eine relative Verschiebung und/oder Rotation des Messrohrs (6) bezüglich der Halteeinrichtung (7) durch Blockiermittel (18 - 22) des Messrohrs (6) und/oder der Halteeinrichtung (7) blockiert ist.

11. Durchflusszähler nach Anspruch 10, **dadurch gekennzeichnet, dass** die Blockiermittel (18 - 22) in Umfangsrichtung des Messrohres (6) derart angeordnet sind, dass sie genau eine Sollorientierung des Messrohrs (6) bezüglich der Halteeinrichtung (7) vorgeben.

12. Durchflusszähler nach einem der vorangehenden Ansprüche, **dadurch gekennzeichnet, dass** die Halteeinrichtung (7) wenigstens ein Zentriermittel (50) aufweist, das sich an der Wand des Strömungskanals (3) abstützt und/oder dass zwischen der Halteeinrichtung (7) und der Wand des Strömungskanals (3) wenigstens ein Zentriermittel angeordnet ist, wobei das Zentriermittel (50) elastisch vorgespannt ist.

13. Durchflusszähler nach Anspruch 12, **dadurch gekennzeichnet, dass** die Halteeinrichtung mehrere in Umfangsrichtung des Strömungskanals beabstandete elastisch verformbare Federelemente (32) als Zentriermittel (50) aufweist, die durch Ihre Rückstellkraft einen jeweiligen Anlageabschnitt (33) gegen die Wand des Strömungskanals (3) drücken.

14. Verfahren zur Herstellung eines Durchflusszählers (1) zur Erfassung einer Durchflussmenge eines Fluids, umfassend die Schritte:
- Bereitstellen eines Gehäuses (2) mit einem Strömungskanal (3), durch den das Fluid von einer Einlassöffnung (4) des Gehäuses zu einer Auslassöffnung (5) des Gehäuses (2) führbar ist, eines Messrohrs (6), eines Strömungsrichters (8), der wenigstens eine von dem Fluid durchströmbare Durchbrechung (9) aufweist, und zweier Haltekomponenten (10, 11), durch deren kraftschlüssige und/oder formschlüssige Verbindung miteinander eine Halteeinrichtung (7) zusammengesetzt wird, als separate Bauteile,
- Anbringen des Messrohrs (6) und des Strömungsrichters (8) an der Halteeinrichtung (7), wobei der Strömungsrichter (8) durch eine formschlüssige Verbindung an der Halteeinrichtung (7) befestigt wird, wobei die erste Haltekomponente (10) und der Strömungsrichter (8) formschlüssig verbunden werden, wobei die erste Haltekomponente (10) und der Strömungsrichter (8) derart ausgebildet sind, dass alleine durch ihre formschlüssige Verbindung ihre relative Lage und Orientierung festgelegt wird,
- Einsetzen der Halteeinrichtung (7) mit dem daran befestigten Messrohr (6) und Strömungsrichter (8) in den Strömungskanal (3) des Gehäuses (2) derart, dass der Strömungsrichter (8) zwischen der Einlassöffnung (4) und dem Messrohr (6) oder zwischen dem Messrohr (6) und der Auslassöffnung (5) angeordnet wird und dass der Strömungsquerschnitt des Strömungskanals (3) in einem Abschnitt (17) durch das Messrohr (6) verengt wird.

## Claims

1. Flow meter for detecting a flow rate of a fluid, comprising a housing (2) with a flow channel (3), through which flow channel the fluid can be guided from an inlet opening (4) of the housing (2) to an outlet opening (5) of the housing (2), a measurement tube (6), which is inserted into the flow channel (3) and narrows the flow cross section in one section (17) of the flow channel (3), and a holding device (7), by way of which the measurement tube (6) is mounted on the housing (2), wherein, between the inlet opening (4) and the measurement tube (6) and/or between the measurement tube (6) and the outlet opening (5), there is arranged a respective flow straightener (8) which has at least one aperture (9) through which the fluid can flow, wherein the flow straightener (8) is formed as a separate component which is fastened to the holding device (7) by way of a form-fitting connection, **characterized in that** the holding device (7) comprises a first and a second holding component (10, 11), which are connected to one another in a force-fitting and/or form-fitting manner, wherein the first holding component (10) and the flow straightener (8) are connected in a form-fitting manner, wherein the first holding component (10) and the flow straightener (8) are formed in such a way that their relative position and orientation are fixed solely by way of their form-fitting connection.

2. Flow meter according to Claim 1, **characterized in that**, in the flow channel (3), an inlet-side reflection element (26) is arranged between the inlet opening (4) and the measurement tube (6) and an outlet-side reflection element (27) is arranged between the measurement tube (6) and the outlet opening (5), wherein the inlet-side and outlet-side reflection elements (26, 27) serve for guiding ultrasound waves from a first to a second ultrasonic transducer (24, 25), wherein the flow straightener (8) is arranged between the inlet opening (4) and the inlet-side reflection element (26), or between the outlet-side reflection element (27) and the outlet opening (5), and projects beyond the holding device (7) in a longitudinal direction of the flow channel (3).

3. Flow meter according to Claim 2, **characterized in that** the inlet-side and/or the outlet-side reflection element (26, 27) are/is mounted, in particular in a form-fitting manner by way of holding protrusions of the respective reflection element (26, 27), on the holding device (7) or are/is formed by the holding device (7).

4. Flow meter according to one of the preceding claims, **characterized in that** the flow straightener (8) makes contact with the holding device (7) in a coupling region (13, 14, 15) so as to form the force-fitting or form-fitting connection, wherein the coupling region (13, 14, 15) is spaced apart from the side walls of the flow channel (3).

5. Flow meter according to one of the preceding claims, **characterized in that** the first holding component (10) has at least one first latching element (35) and the second holding component (11) has at least one second latching element (34), which are latched in pairs in a circumferential direction of the flow channel (3) so as to connect the first and second holding components (10, 11) to one another, wherein the respective first latching element (35) has a projection (39) in a radial direction of the flow channel (3), which projection extends in a circumferential direction of the flow channel (3) as far as an end, facing the second holding component (11), of the respective first latching element (35), and wherein the respective second latching element (34) has a groove (40) for guidance of the projection (39) during the latching of the respective latching elements (34, 35), or vice versa.

6. Flow meter according to one of the preceding claims, **characterized in that** the first and/or the second holding component (10, 11) and/or the or a reflection element (26, 27) for reflection of ultrasound waves have/has a holding means (43), by way of which the reflection element (26, 27) is mounted in a force-fitting and/or form-fitting manner on the first and/or the second holding component (10, 11).

7. Flow meter according to one of the preceding claims, **characterized in that** the force-fitting or form-fitting connection is formed between the or a coupling region (13, 14, 15) of the holding device (7) or the first and/or second holding component (10, 11) and a coupling section (12) of the flow straightener (8), wherein the coupling region (13, 14, 15) and the coupling section (12) are formed in such a way that the flow straightener (8) can be connected to the holding device (7), or to the first and/or second holding component (10, 11), with exactly one orientation.

8. Flow meter according to one of the preceding claims, **characterized in that** a front surface, facing away from the measurement tube (6), of the flow straightener (8) is neither circularly symmetrical nor rotationally symmetrical.

9. Flow meter according to one of the preceding claims, **characterized in that** the holding device (7) has at least one projection (48) which engages into a recess (49) in a side wall of the flow channel (3) or vice versa, and/or in that, at the outlet side, the flow channel (3) has a shoulder (52) against which the holding device (7) bears.

10. Flow meter according to one of the preceding claims, **characterized in that** a relative translation and/or rotation of the measurement tube (6) in relation to the holding device (7) is blocked by blocking means (18-22) of the measurement tube (6) and/or of the holding device (7) .

11. Flow meter according to Claim 10, **characterized in that** the blocking means (18-22) are arranged in a circumferential direction of the measurement tube (6) in such a way that they predefine exactly one target orientation of the measurement tube (6) in relation to the holding device (7).

12. Flow meter according to one of the preceding claims, **characterized in that** the holding device (7) has at least one centring means (50), which is supported against the wall of the flow channel (3), and/or **in that** at least one centring means is arranged between the holding device (7) and the wall of the flow channel (3), wherein the centring means (50) is elastically preloaded.

13. Flow meter according to Claim 12, **characterized in that** the holding device has as centring means (50) multiple elastically deformable spring elements (32) which are spaced apart in a circumferential direction of the flow channel and which, by virtue of their restoring force, push a respective bearing section (33) against the wall of the flow channel (3).

14. Method for producing a flow meter (1) for detecting a flow rate of a fluid, comprising the steps of:
- providing a housing (2) with a flow channel (3), through which flow channel the fluid can be guided from an inlet opening (4) of the housing to an outlet opening (5) of the housing (2), a measurement tube (6), a flow straightener (8), which has at least one aperture (9) through which the fluid can flow, and two holding components (10, 11), by way of the force-fitting and/or form-fitting connection of which to one another a holding device (7) is assembled, as separate components,
- attaching the measurement tube (6) and the flow straightener (8) to the holding device (7), wherein the flow straightener (8) is fastened to the holding device (7) by way of a form-fitting connection, wherein the first holding component (10) and the flow straightener (8) are connected in a form-fitting manner, wherein the first holding component (10) and the flow straightener (8) are formed in such a way that their relative position and orientation are fixed solely by way of their form-fitting connection,
- inserting the holding device (7), with the measurement tube (6) and flow straightener (8) fastened thereto, into the flow channel (3) of the housing (2) in such a way that the flow straightener (8) is arranged between the inlet opening (4) and the measurement tube (6) or between the measurement tube (6) and the outlet opening (5), and that the flow cross section of the flow channel (3) is narrowed in one section (17) by the measurement tube (6).

## Revendications

1. Débitmètre pour la détection d'un débit d'un fluide, comprenant un boîtier (2) avec un canal d'écoulement (3) à travers lequel le fluide peut être conduit d'une ouverture d'entrée (4) du boîtier (2) à une ouverture de sortie (5) du boîtier (2), un tube de mesure (6) qui est introduit dans le canal d'écoulement (3) et qui rétrécit la section transversale d'écoulement dans une section (17) du canal d'écoulement (3), et un appareil de maintien (7) par lequel le tube de mesure (6) est maintenu sur le boîtier (2), un directeur d'écoulement respectif (8) étant agencé entre l'ouverture d'entrée (4) et le tube de mesure (6) et/ou entre le tube de mesure (6) et l'ouverture de sortie (5), qui présente au moins un percement (9) pouvant être traversé par le fluide, le directeur d'écoulement (8) étant configuré sous forme de pièce séparée qui est fixée à l'appareil de maintien (7) par une liaison par complémentarité de forme, **caractérisé en ce que** l'appareil de maintien (7) comprend un premier et un deuxième composant de maintien (10, 11), qui sont reliés l'un à l'autre par adhérence et/ou par complémentarité de forme, le premier composant de maintien (10) et le directeur d'écoulement (8) étant reliés par complémentarité de forme, le premier composant de maintien (10) et le directeur d'écoulement (8) étant configurés de telle sorte que leur position et leur orientation relatives sont établies uniquement par leur liaison par complémentarité de forme.

2. Débitmètre selon la revendication 1, **caractérisé en ce que**, dans le canal d'écoulement (3), un élément de réflexion côté entrée (26) est agencé entre l'ouverture d'entrée (4) et le tube de mesure (6), et un élément de réflexion côté sortie (27) est agencé entre le tube de mesure (6) et l'ouverture de sortie (5), l'élément de réflexion côté entrée et l'élément de réflexion côté sortie (26, 27) servant à conduire des ondes ultrasonores d'un premier transducteur ultrasonore vers un deuxième (24, 25), le directeur d'écoulement (8) étant agencé entre l'ouverture d'entrée (4) et l'élément de réflexion côté entrée (26) ou entre l'élément de réflexion côté sortie (27) et l'ouverture de sortie (5) et dépassant de l'appareil de maintien (7) dans la direction longitudinale du canal d'écoulement (3).

3. Débitmètre selon la revendication 2, **caractérisé en ce que** l'élément de réflexion côté entrée et/ou l'élément de réflexion côté sortie (26, 27) sont maintenus sur l'appareil de maintien (7), notamment par complémentarité de forme avec des ergots de maintien de l'élément de réflexion respectif (26, 27), ou sont formés par l'appareil de maintien (7).

4. Débitmètre selon l'une quelconque des revendications précédentes, **caractérisé en ce que** le directeur d'écoulement (8) est en contact avec l'appareil de maintien (7) dans une zone d'accouplement (13, 14, 15) afin de former la liaison par adhérence ou par complémentarité de forme, la zone d'accouplement (13, 14, 15) étant espacée des parois latérales du canal d'écoulement (3).

5. Débitmètre selon l'une quelconque des revendications précédentes, **caractérisé en ce que** le premier composant de maintien (10) présente au moins un premier élément d'encliquetage (35) et le deuxième composant de maintien (11) présente au moins un deuxième élément d'encliquetage (34), qui sont encliquetés par paires dans la direction circonférentielle du canal d'écoulement (3) afin de relier l'un à l'autre le premier et le deuxième composant de maintien (10, 11), le premier élément d'encliquetage respectif (35) présentant une saillie (39) dans la direction radiale du canal d'écoulement (3), qui s'étend dans la direction circonférentielle du canal d'écoulement (3) jusqu'à une extrémité du premier élément d'encliquetage respectif (35) tournée vers le deuxième composant de maintien (11), et le deuxième élément d'encliquetage respectif (34) présentant une rainure (40) pour conduire la saillie (39) dans le cadre de l'encliquetage des éléments d'encliquetage respectifs (34, 35) ou inversement.

6. Débitmètre selon l'une quelconque des revendications précédentes, **caractérisé en ce que** le premier et/ou le deuxième composant de maintien (10, 11) et/ou le ou un élément de réflexion (26, 27) pour la réflexion d'ondes ultrasonores présente un moyen de maintien (43), par lequel l'élément de réflexion (26, 27) est maintenu par adhérence et/ou par complémentarité de forme sur le premier et/ou le deuxième composant de maintien (10, 11).

7. Débitmètre selon l'une quelconque des revendications précédentes, **caractérisé en ce que** la liaison par adhérence ou par complémentarité de forme entre la ou une zone d'accouplement (13, 14, 15) de l'appareil de maintien (7) ou du premier et/ou du deuxième composant de maintien (10, 11) et une section d'accouplement (12) du directeur d'écoulement (8) est formée, la zone d'accouplement (13, 14, 15) et la section d'accouplement (12) étant configurées de telle sorte que le directeur d'écoulement (8) peut être relié dans exactement une orientation à l'appareil de maintien (7) ou au premier et/ou au deuxième composant de maintien (10, 11).

8. Débitmètre selon l'une quelconque des revendications précédentes, **caractérisé en ce qu'**une face avant du directeur d'écoulement (8), détournée du tube de mesure (6), n'est ni à symétrie de rotation ni à symétrie radiale.

9. Débitmètre selon l'une quelconque des revendications précédentes, **caractérisé en ce que** l'appareil de maintien (7) présente au moins une saillie (48), qui s'engage dans un évidement (49) d'une paroi latérale du canal d'écoulement (3) ou inversement, et/ou en ce que le canal d'écoulement (3) présente, du côté de la sortie, un épaulement (52) sur lequel repose l'appareil de maintien (7).

10. Débitmètre selon l'une quelconque des revendications précédentes, **caractérisé en ce qu'**un déplacement relatif et/ou une rotation du tube de mesure (6) par rapport à l'appareil de maintien (7) sont bloqués par des moyens de blocage (18-22) du tube de mesure (6) et/ou de l'appareil de maintien (7).

11. Débitmètre selon la revendication 10, **caractérisé en ce que** les moyens de blocage (18-22) sont agencés dans la direction circonférentielle du tube de mesure (6) de telle sorte qu'ils définissent exactement une orientation de consigne du tube de mesure (6) par rapport à l'appareil de maintien (7).

12. Débitmètre selon l'une quelconque des revendications précédentes, **caractérisé en ce que** l'appareil de maintien (7) présente au moins un moyen de centrage (50) qui s'appuie sur la paroi du canal d'écoulement (3) et/ou **en ce qu'**au moins un moyen de centrage est agencé entre l'appareil de maintien (7) et la paroi du canal d'écoulement (3), le moyen de centrage (50) étant précontraint élastiquement.

13. Débitmètre selon la revendication 12, **caractérisé en ce que** l'appareil de maintien présente plusieurs éléments ressorts (32) déformables élastiquement, espacés dans la direction circonférentielle du canal d'écoulement, en tant que moyens de centrage (50), qui, par leur force de rappel, pressent une section d'appui respective (33) contre la paroi du canal d'écoulement (3) .

14. Procédé de fabrication d'un débitmètre (1) pour la détection d'un débit d'un fluide, comprenant les étapes suivantes :
- la fourniture d'un boîtier (2) avec un canal d'écoulement (3) à travers lequel le fluide peut être conduit d'une ouverture d'entrée (4) du boîtier à une ouverture de sortie (5) du boîtier (2), d'un tube de mesure (6), d'un directeur d'écoulement (8) qui présente au moins un percement (9) pouvant être traversé par le fluide, et de deux composants de maintien (10, 11), par la liaison par adhérence et/ou par complémentarité de forme l'un à l'autre desquels un appareil de maintien (7) est assemblé, en tant que pièces séparées,
- la disposition du tube de mesure (6) et du directeur d'écoulement (8) sur l'appareil de maintien (7), le directeur d'écoulement (8) étant fixé à l'appareil de maintien (7) par une liaison par complémentarité de forme, le premier composant de maintien (10) et le directeur d'écoulement (8) étant reliés par complémentarité de forme, le premier composant de maintien (10) et le directeur d'écoulement (8) étant configurés de telle sorte que leur position et leur orientation relatives sont établies uniquement par leur liaison par complémentarité de forme,
- l'introduction de l'appareil de maintien (7) avec le tube de mesure (6) et le directeur d'écoulement (8) qui y sont fixés dans le canal d'écoulement (3) du boîtier (2) de telle sorte que le directeur d'écoulement (8) est agencé entre l'ouverture d'entrée (4) et le tube de mesure (6) ou entre le tube de mesure (6) et l'ouverture de sortie (5) et que la section transversale d'écoulement du canal d'écoulement (3) est rétrécie dans une section (17) par le tube de mesure (6).
